(19) Europäisches Patentamt

European Patent Office

Office européen des brevets

(11) EP 0 743 609 A2

(12) EUROPEAN PATENT APPLICATION

(43) Date of publication:
20.11.1996 Bulletin 1996/47

(51) Int Cl.⁶: G06F 17/30

(21) Application number: 96303413.7

(22) Date of filing: 14.05.1996

(84) Designated Contracting States:
DE FR GB

(30) Priority: 19.05.1995 US 446170

(71) Applicant: AT&T IPM Corp.
Coral Gables, Florida 33134 (US)

(72) Inventors:
• Jagadish, Hosagrahar Visvesvaraya
Union, New Jersey 07922 (US)

• Silberschatz, Abraham
Summit, New Jersey 07901 (US)
• Mumick, Inderpal Singh
Union, New Jersey 07922 (US)

(74) Representative:
Buckley, Christopher Simon Thirsk et al
Lucent Technologies,
5 Mornington Road
Woodford Green, Essex IG8 0TU (GB)

(54) Method for querying incrementally maintained transactional databases

(57)    The chronicle data model of the present invention permits the capture, within the data model, of many computations common to transactional recording systems. An important aspect of the chronicle data model is incremental maintenance of materialized view in time independent of the size of the recorded stream.

The chronicle data model differs from the relational model in that it encapsulates within itself (1) support for aggregate, or summary, queries over sequences that may not be stored in their entirety, through the use of materialized (or persistent) views; and, (2) automatic incremental maintenance of persistent views as records are inserted into the sequence.

A chronicle data model can be implemented on top of a relational system. An aspect of this invention is to reduce the complexity of the application domains that need a chronicle system by encapsulating this model within the database. Within the chronicle data model of the present invention is disclosed: the type of summary queries that can be answered by using persistent views is determined, the complexity of incrementally maintaining the persistent views and development of a language ensuring low maintenance complexity independent of the sequence sizes.

FIG. 2

## Description

### TECHNICAL FIELD

This invention relates generally to database systems, and more particularly, to transactional recording systems.

### BACKGROUND OF THE INVENTION

Many database systems are used to record a stream of transactional information, such a credit card transactions, telephone calls, stock trades, flights taken, sensor outputs in a control system, etc. Applications such as banking, billing, and trading that deal primarily with transactional data have several common characteristics.

Each record in an incoming sequence of transaction records has several attributes of the transaction. The sequence of records can be very large, and grows in an unbounded fashion. The transaction records are stored in a database for some latest time window, but it is beyond the capacity of conventional database systems to store and provide access to this sequence for ever.

For example, a major telecommunications company is known to collect 75GB (giga-bytes) of sequence data every day, or 27TB (tera-bytes) of sequence data every year. No current database system can even store so much data, far less make it accessible in an interactive manner.

Queries are conducted over the stored sequence of transaction records, with stringent response time requirements. Of particular interest are summary queries that access a summarization, or aggregate information of past transactional activity.

For example, a cellular phone company may want to make a summary query that computes the total number of minutes of calls made in the current month from a particular cellular phone number. It may be desirable to make such a query every time a cellular phone is turned on, and to display the result on the customer's phone instrument. A customer care agent in the cellular company may want to ask a different summary query, such as: "What is the total number of minutes of calls made from a given number since the number was assigned to the current customer?"

These applications can be and are implemented using commercially available relational databases. However, the relational model is not suitable to capture and exploit the peculiar characteristics of a transaction recording system. For example, there is no support for answering a summary query over a sequence that is not stored in the database in its entirety. There is no support for answering a summary query over a large sequence, even if the sequence is stored, with the speed needed to process a banking transaction, or to display the answer on the customer's phone at power-on time.

These summary queries are therefore supported in today's systems by procedural application code. For example, an application program may define a few summary fields (e.g., *minutes_called, dollar_balance)* for each customer, and update these fields whenever a new transaction is processed for this purpose. Summary queries are then answered by looking up the summary fields, rather than going into the sequence of transaction records. This gives the applications a fast response time, as well as independence from the need to lookup past transactional data. Some applications, such as ATM withdrawals, require that a summary field (dollar_balance) be updated as the transaction is executed, since the summary query needs to be made before the next ATM withdrawal. Some applications may choose to use triggers to invoke the updating code; others may update the summary fields as they process the transaction in batch. In all cases the logic to update the summary fields due to a transaction is encoded procedurally, and the burden of writing this code lies with the application programmer. This updating code is known to be very tricky, and has been the cause of well-publicized banking disasters (e.g. Chemical bank ATM withdrawals caused incorrect updates on February 18, 1994, leading to thousands of bounced checks and frustrated customers).

The need to define summary fields and to write the update procedures within the application code is one of the reasons for the complexity of banking, billing, and other similar systems.

### SUMMARY OF THE INVENTION

The present invention discloses a method for using a computer system to process queries of a transactional recording system database by first defining a chronicle comprising a relation with an additional sequencing attribute, where the relation comprises an unordered set of tuples; then generating a persistent view from the chronicle using a view definition language. The chronicle is incrementally maintained in response to transactions processed in the database. Summary queries are answered from the persistent view.

The persistent view of the present invention is generated by first generating the chronicle by an intermediate chronicle algebra and then summarizing and mapping the chronicle produced by the intermediate chronicle algebra into the persistent view.

The persistent views of the present invention are incrementally maintained by proactively updating a relation external to the chronicle by insertion, deletion or modification of a tuple in the unordered set of tuples of the relation. The relation has a plurality of temporal versions, each one for every update. The persistent view on the chronicle may be defined by joining the tuples of the chronicle with one of the plural temporal versions of the relation. The chronicle is updated by inserting tuples into the chronicle, then the persistent view which depends on this chronicle is updated to reflect this insertion. The updated persistent view is then stored.

One aspect of the present invention provides for an intermediate chronicle algebra used to derive the persistent view, which includes operations for selecting from the tuples on the chronicle those which satisfy a predicate; projecting the chronicle on attributes that include a sequencing attribute; forming a natural equijoin between two chronicles on the sequencing attribute; forming a union of two chronicles in a same chronicle group, and having a same type; determining a difference of two chronicles in the same chronicle group, and having the same type; deriving a groupby with aggregation, having grouping attributes, with a sequence number as one of the grouping attributes; and, determining a cartesian product between the chronicle and any relation, wherein an implicit temporal join on the sequencing attribute exists between the chronicle and the relation.

Another aspect of the invention allows for generating a plurality of persistent views for the chronicle and incrementally maintaining the plurality of persistent views.

Yet another aspect of the invention allows for the periodic maintenance of a persistent view whether the persistent view is maintained for a specified period and is overwritten at end of that period.

BRIEF DESCRIPTION OF THE DRAWINGS

Fig. 1A depicts operations performed at a time of new chronicle record entry according to one embodiment of the present invention.

Fig. 1B depicts operations performed at query time according to one embodiment of the present invention.

Fig. 2 illustrates periodic persistent view updating according to one embodiment of the present invention.

Fig. 3 shows an illustrative embodiment of an implementation of the present invention.

DETAILED DESCRIPTION

Some known preliminary matters are now set out which are helpful to an understanding of the present invention.

Under relational algebra, and with grouping and aggregation operations of Structured Query Language ("SQL"), the following syntax is used to express a grouping operation:

$$GROUPBY(R,GL,AL)$$

where $R$ is the relation being grouped, $GL = [G_1,...,G_m]$ is the list of grouping attributes, and $AL = [A_1,...,A_n]$ is the list of aggregation functions. This expression defines a result relation with attributes in $GL$ and with one attribute for each aggregation function. Only those aggregation functions $A_i$ that are incrementally computable, or are decomposable into incremental computation functions are pertinent to discussion of the present invention. For the complexity analysis, it is assumed that each aggregation function can be computed in time $O(n)$ over a group of size $n$, and can be incrementally computed in time $O(1)$ over an increment of size 1. **MIN, MAX, SUM** and **COUNT** are examples of such functions.

The present invention will now be described with respect to specific embodiments thereof.

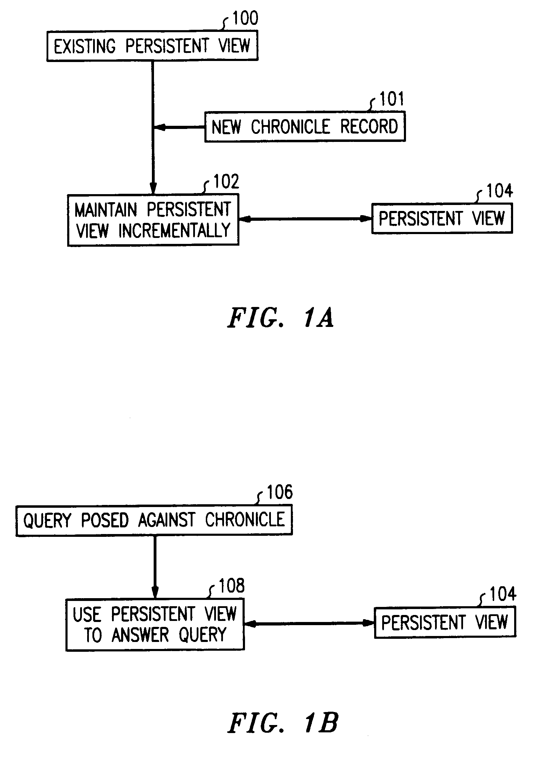

Figure 1A illustrates one embodiment of the operations performed at a time of new chronicle record entry. An existing persistent view is derived in step 100 by the process described below. A new chronicle record is entered in step 101. The existing persistent view 100 is incrementally maintained in step 102 by the procedure as described below, generating a new persistent view 104.

In Fig. 1B one embodiment of the operations performed at a time of query are shown. A query is posed against the chronicle in step 106. The query is answered either exclusively from or with the aid of the persistent view in step 108.

A chronicle database according to the present invention consists of *relations, chronicles,* and *persistent views.* Relations are standard, and each relation may have several temporal versions.

A *chronicle* is similar to a *relation,* except that a chronicle is a *sequence,* rather than an unordered set, of tuples. A chronicle can be represented by a relation with a *extra sequencing* attribute, whose values are drawn from an infinite ordered domain. An existing attribute of the relation can be marked as the sequencing attribute or an additional sequencing attribute can be added. The only update permissible to a chronicle is an insertion of tuples, with the sequence number of the inserted tuples being greater than any existing sequence number in the chronicle. There is no requirement that the sequence numbers be dense. Chronicles can be very large, and the entire chronicle may or may not be stored in the system.

There is a temporal instant (or "chronon") associated with each sequence number. All operations on a tuple of a chronicle are with respect to the database as it was at that point in time. Thus, any join of a chronicle C and a relation R is a union of the corresponding joins of each tuple in C with the version of R that existed at the temporal instant of the tuple in C.

The database maintains a fixed number of *persistent views,* which are views that are materialized into relations, and are always maintained current in response to changes to the underlying database. Each persistent view is materialized when it is initially defined, and it is kept up-to-date, reflecting all the changes that occur in the database as soon as these changes occur. Of particular concern is the maintenance of a persistent view after every append to a chronicle.

Persistent views are defined in a view definition language *L,* and correspond to the procedurally computed summary fields in the current transaction system. Each choice of $L$ derives a particular instance of the chronicle data model of the present invention.

A chronicle database system is a quadruple:

$$(C, R, L, V)$$

where $C = \{C_o, C_1,...C_n\}$, $n\geq 0$, is a set of chronicles, $R = \{R_0,R_1,...Rm\}$, $m \geq 0$, is a set of relations, and $V = \{V_0, V_1,...V_1\}$, $1 \geq 0$, is a set of persistent views defined in a language $L$.

Queries that access the relations and persistent views can be written in any language - relational algebra, structured query language ("SQL"), Datalog, etc. The choice of this language is orthogonal to the chronicle model. The chronicle model enables fast response to queries that access the persistent views; these queries may otherwise have been defined as complex SQL queries over the relations and chronicles and thus would not likely have been answerable with acceptable performance. Further, a system would typically provide detailed queries over some latest window on the chronicle; again the choice of the window and the query language are orthogonal to the chronicle model.

The only types of updates permitted are those that modify the relations and chronicles. An update to a relation R can be an insert, delete, or modification of a tuple in R. An update to a chronicle C can only be the insertion of a new tuple (or tuples) to C with a sequence number greater than the sequence number of all existing tuples in C. These updates are discussed individually below.

Each relation conceptually has multiple temporal versions, one after every update. In any persistent view defined in language $L$, any joins between the relations and chronicles have an implicit temporal join on the sequencing attribute: each tuple of a chronicle is joined with the version of the relations that was current when the particular chronicle tuple was generated.

If an update to a relation affects only the versions corresponding to sequence numbers not seen as yet, then it is a *proactive* update. Such an update does not affect the persistent views. Only subsequent chronicle updates see the new relation values. Since maintainability of persistent views is critical in the chronicle model, the language $L$ is limited so that only proactive updates to relations are allowed.

In contrast, a *retroactive* update to a relation would require older tuples in the chronicles to be re-processed. Such updates, when necessary, are computationally expensive to maintain, may not be maintainable if the entire past chronicle is unavailable, and are not included as part of the chronicle model.

An update to a chronicle may cause a change in each persistent view, the maintenance of which is discussed below.

Each time a transaction completes, a record for the transaction is appended to the chronicle, which may affect the state of one or more persistent views. The transaction rate that can be supported by a chronicle system is determined by the complexity of incremental maintenance of its persistent views. Thus, it is important to choose a language $L$ that ensures that incremental view maintenance can be done efficiently. Moreover, since chronicles may not be stored in the system, the language $L$ should allow the incremental maintenance without having access to the entire chronicles. Ideally, the complexity of maintaining a view defined in $L$ should be low - independent of the size of the relations and the view itself, modulo the overhead of index lookups.

In the present invention, the complexity of a chronicle system is the complexity of incremental computation of the language $L$ used to express the persistent views. A class IM-$T$ means that all persistent views defined in the language can be maintained in time $O(T)$ in response to a single append into a chronicle (IM for incremental maintenance).

The following incremental complexity classes are defined in one embodiment of the present invention:

IM-Constant: A language is in the class IM-Constant if any persistent view defined in the language can be incrementally maintained in response to a single append into the chronicle in constant time.

IM-log($R$): A language is in the class IM-log($R$) if any persistent view defined in the language can be incrementally maintained in response to a single append into the chronicle in time logarithmic in size of the relations.

IM-$R^k$: A language is in the class IM-$R^k$ if any persistent view defined in the language can be incrementally maintained in response to a single append into the chronicle in time polynomial in size of the relations.

IM-$C^k$: A language is in the class IM-$C^k$ if any persistent view defined in the language can be incrementally maintained in response to a single append into the chronicle in time polynomial in size of the chronicle.

The size of the relations, $|R|$, is assumed to be much smaller than the size of the chronicle $|C|$. It will be easily understood that the following relationships hold between the sets of views that can be described by languages in each class:

$$\text{IM-Constant} \subset \text{IM-log}(R) \subset \text{IM-}R^k \subset \text{IM-}C^k$$

In a high throughput system, a complexity of IM-Constant is desired which implies that even index lookups are not permitted, and is thus difficult to achieve. At the other end of the spectrum, a chronicle model with complexity IM-$C^k$ would permit arbitrary access to the chronicle. Such complexity is totally impractical for an operation to be executed at each append into each chronicle.

The choice of language $L$ for defining persistent views with a low IM complexity is crucial. Relational algebra with grouping and incrementally computable aggregate operators is not an acceptable choice for $L$, because relational algebra, extended with grouping and aggregation, applied to chronicles and relations, is in the class IM-$C^k$, and is not in the class IM-$R^k$.

The largest restrictions of relation algebra are in the first three IM complexity classes, which are all independent of the size of the chronicle are derived. The derivation can be broken down into two steps. First, defining an intermediate chronicle algebra that maps chronicles and relations into chronicles, Second, adding a summarization step that maps chronicle algebra expressions into relations by projecting out the sequencing attribute, possibly doing a grouping and aggregation alongside.

All inserted tuples into a chronicle must have a sequence number greater than all existing sequence numbers, but multiple tuples with the same sequence number can be inserted simultaneously. For instance, when a tuple is inserted into a base chronicle, each of the two operands of a union may derive a distinct tuple with the same sequence number. The union expression can then have two distinct tuples with the same sequence number.

A *chronicle group* is defined in the present invention as a collection of chronicles whose sequence numbers are drawn from the same domain, along with the requirement that an insert into any chronicle in a chronicle group must have a sequence number greater than the sequence number of any tuple in the chronicle group. Operations like union, difference and join are permitted amongst chronicles of the same chronicle group.

One illustrative embodiment of chronicle algebra ("CA") according to the present invention consists of the following operators (C is a chronicle or a chronicle algebra expression, $A_1,...,A_n$ are attributes of the chronicle, and $p$ is a predicate):

- A selection of a chronicle, $\sigma_p(C)$, where $p$ is a predicate of the form $A_1 \theta A_2$, or $A_1 \theta k$, or a disjunction of such terms, $k$ is a constant, and $\theta$ is one of $\{=, \neq, \leq, <, >, \geq\}$. $\sigma_p(C)$ selects chronicle tuples that satisfy the predicate $p$. The resulting chronicle has the same type as the chronicle $C$.
- Projection of a chronicle on attributes that include the sequencing attribute, $\Pi_{A_1,...,A_n}(C)$ .
- A natural equijoin between two chronicles on the sequencing attribute, $C_1 \bowtie_{C_1.SN = C_2.SN} C_2$ where $SN$ is the sequencing attribute, $C_1$ and $C_2$ are chronicles in the same chronicle group, and one of the sequencing attributes is projected out from the result.
- Union of two chronicles, $C_1 \cup C_2$, where $C_1$ and $C_2$ are chronicles in the same chronicle group, and have the same type.
- Difference of two chronicles, $C_1 - C_2$, where $C_1$ and $C_2$ are chronicles in the same chronicle group, and have the same type.
- A groupby with aggregation, with the sequence number as one of the grouping attributes: GROUPBY(C, *GL, AL),* where *C* is a chronicle being grouped, GL is the list of grouping attributes (must include the sequencing attribute), and *AL* is the list of aggregation functions.
- A cartesian product between a chronicle, *C,* and any relation $R$, $C \times R$. Though this operation is written as a cross product, an implicit temporal join on the sequencing attribute exists between *C* and *R.*

A view defined by the chronicle algebra is monotonic with respect to insertions into the base chronicles. Whenever tuples with sequence numbers greater than all existing sequence numbers are added to the base chronicles, the effect is to add tuples with some of these new sequence numbers to the view.

Each view defined using a chronicle algebra expression is a chronicle in the same chronicle group as the operand chronicles. CA(1) is chronicle algebra, without the cross product operation between chronicles and relations. CA($\bowtie$) is chronicle algebra, where the cross product operation between chronicles and relations is replaced by a join, with a guarantee that at most a constant number of tuples join with each chronicle tuple. A sufficient condition for the guarantee is that the join be on a key of the relation $R$.

The changes, due to insertions into the base chronicles, for a chronicle view defined by CA can be computed in time and space independent of the size of the chronicles and independent of the size of the view with Time = $O((u \mid R \mid)^j \log(\mid R \mid))$, and Space = $O((u \mid R \mid)^j)$, where $u$ is the number of unions in the expression defining the view, $\mid R \mid$ is the size of the relation $R$, and $j$ is the number of equijoins and cross products in the expression defining the view. Those defined by CA($\bowtie$) can be computed in Time = $O(u^j \log(\mid R \mid))$, and Space = $O(u^j)$. Those defined by CA(1) can be computed in Time = $O(u^j)$, and Space = $O(u^j)$.

In all cases, neither the chronicle view nor the chronicles need to be stored or accessed for the view maintenance; and this is the reason for obtaining a complexity which is independent of both the sizes of the chronicle and the sizes of the view.

Any extension of the chronicle algebra with either of (1) projection without including the sequencing attribute, or (2) a groupby operation without including the sequencing attribute as a grouping attribute leads to an algebra that can define an expression that is not a chronicle. Further, an extension of the chronicle algebra with either of (1) cross product between chronicles, or (2) a non-equijoin between two chronicles leads to an algebra that can define an expression for which the time for incremental view maintenance is dependent on the size of the chronicle.

It is implied by this that the chronicle algebra is the largest subset of relational algebra operations that is in IM-$R^k$, and the CA($\bowtie$) is the largest subset of relational algebra operations that is in IM-log($R$). Expressions can also be defined using the cross-product or non-equijoin between chronicles that are in *IM-$R^k$.*

A summarization step maps chronicles produced by chronicle algebra into persistent views, which are relations without the sequencing attributes. The persistent view is then stored, and updated whenever an insert occurs into the chronicles on which the persistent view depends.

The *summarized chronicle algebra* (SCA), has the two basic operations that can eliminate the sequence attribute and map a chronicle algebra expression $\chi$ into a relation.

- Projection, with the sequencing attribute projected out; that *is, $\Pi_{A_1,...,A_n}(X)$* , where the attributes $A_1,..., A_n$ do not include the sequencing attribute.
- Grouping with aggregation, where the sequencing attribute is not included in the grouping list, and where the aggregation functions are incrementally computable (or decomposable into incrementally computable functions); represented as GROUP-BY($_\chi$, *GL, AL)* where the grouping list *GL* does not include the sequencing attribute of $\chi$.

If the expression $\chi$ is in the CA(1), the resulting language is called SCA(1); if the expression $\chi$ is in the CA($\bowtie$), the resulting language is called SCA($\bowtie$).

It follows that every persistent view expressed in SCA produces a relation (not a chronicle) that does not have the sequence number as an attribute. Once a relation is defined using SCA, it could be further manipulated by using relational algebra and the other relations in the system, to define a persistent view. However, since incremental maintenance is the key, it is important to store a persistent view that can be maintained without accessing the full chronicles over which the summarization step is defined.

Given a set of changes to chronicle algebra expression, incremental maintenance of a persistent view written in SCA in response to insertions to a chronicle can be done in

- Space equal to the size of the view.
- Time = $O(t\log(|V|))$, where $|V|$ is the size of the persistent view $V$, and t is the number of tuples inserted into the chronicle algebra (or CA(1) or CA ($\bowtie$)) expression $\chi$.

SCA is contained in class IM-$R^k$,-SCA($\bowtie$) is contained in class IM-log($R$), and SCA(1) is contained in class IM-Constant.

Thus, although the result of a chronicle algebra expression contains sequence numbers, and therefore may have a size that is polynomial in $|C|$, incremental maintenance of summarized chronicle algebra expressions can be done in time independent of $|C|$, since the chronicle view is not accessed during maintenance.

Some applications within the purview of the chronicle model require the definition of a view that is computed over several, potentially overlapping, intervals on a chronicle, one view computation for each interval. To address this need, a *periodic summarized chronicle algebra* is implemented by adding, to the chronicle algebra, features to construct sets of time intervals over which the persistent views can be computed. A mapping from sequence numbers in a chronicle to time intervals must be made for the periodic summarized chronicle algebra to be defined.

Given a view V in summary algebra, and a calendar D (i.e., a set of time intervals), $V < D >$ specifies a set of views $V_1,...,V_k$, one for each interval in the calendar $D$. The view $V_i$ for interval $i$ is defined as in $V$, but with a selection on the chronicle, which requires that all chronicle tuples be within the interval $i$, under the mapping defined from sequence numbers to time intervals. If the calendar D has an infinite number of intervals, there will be an infinite number of views $V_i$. The view expression $V < D >$ is called a periodic view. When the calendar $D$ has only one interval, the periodic view corresponds to a single view defined using an extra selection on the chronicle.

The periodic summarized chronicle algebra also provides for an expiration time for a view, after which the view is not needed. Expiration dates allow the system to implement an infinite number of periodic views, provided only a finite number of them are current at any one instant.

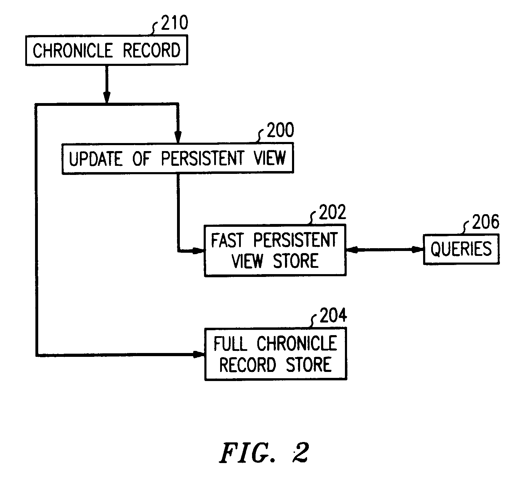

Figure 2 illustrates periodic updates according to one embodiment of the present invention. An updated persistent view is generated from a chronicle record 210 in step 200. The updated persistent view is stored in an efficient ("fast") storage structure in step 202. Queries are answered against the fast persistent view in step 206. The chronicle record is stored in a full chronicle store in step 204, appended to previously stored chronicle records.

Billing applications typically require periodic views over nonoverlapping intervals. The evaluation of these can be optimized by starting to maintain a view as soon as its time interval starts, and stopping its maintenance as soon as its interval ends. Periodic views over overlapping intervals can be defined to compute moving averages over the transactions in a chronicle. For example, consider a periodic view for every day that computes the total number of shares of a stock sold during the 30 days preceding the day. The computation of these views can be optimized by noticing that the sum of shares is an incrementally computable function. The total number of shares sold for each of the last 30 days are kept separately, and the view is derived as the sum of these 30 numbers. Moving from one periodic view to the next one involves shifting a cyclic buffer of these 30 numbers. Further, if an expiration date is given, the space for the periodic view can be rescued.

A computation is automatically derived by the system for a generic periodic view expressed over any given set of overlapping time intervals.

When multiple views are to be maintained over the same chronicle, each update to the chronicle requires checking all the views to determine if they need to be updated in the following manner:

. Identify the persistent views *V* that will be affected. These are filtered out early so as not to waste computation resources. The problem is similar to detecting the active rules that must be checked after a database update.

. For each persistent view *V*, identify the tuples that will be affected. Thus, the persistent views need to have indices.

. When periodic views are used, identify the persistent views that are *active* - these are the views defined for the *current* time interval, and only these periodic views need to be maintained upon insertions into the chronicle.

Efficient storage structures are needed for fast access to the updated persistent view tuples. Normally only the updated persistent view will be stored. "Slow cheap storage devices" can be used where it is desired to store superseded persistent views (i.e., access speed is not critical so a conventional tape drive or the like will suffice).

Applications often define computations applying to a batch of transactions. For example, a bank may charge a fee based upon the total number of transactions within a period, a telephone company offers a discount based upon the total calls within a period, an airline gives bonus miles based upon total activity within a certain period. For example, a popular telephone discounting plan in the USA gives a discount of 10% on all calls made if the monthly undiscounted expenses exceed $10, a discount of 20% if the expenses exceed $25, and so on. In such applications, a common assumption is that the computations are performed once at the end of the period. This leads to two problems: first, the results of these computations are either available after or inaccurate before the end of the period over which the discount applies; and, second, the transactions need to be processed, for computing these attributes, in batch.

Converting computations on a batch of records to an equivalent incremental computation on individual records is an exercise akin to devising algorithms for incremental view maintenance. For example, for the telephone discount plan, there is a nontrivial mapping for incrementally computing a persistent view for total expenses.

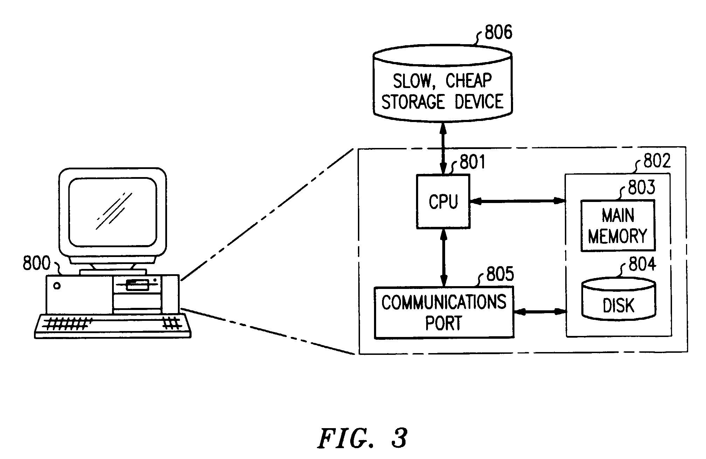

Figure 3 shows an illustrative embodiment of an implementation of the present invention. A workstation 800 comprised of a central processing unit 801 ("CPU") and storage 802. Storage 802 forms an efficient storage device providing fast access to stored data. Storage 802 comprises a main memory 803 and disk 804. The definitions of views, as well as the actual views themselves are stored in storage 802, along with relations that are not chronicles.

Data records for a chronicle are received sequentially through the communications port 805. The CPU 801 accesses storage device 802 to update persistent view stored therein based upon each new chronicle record received. The chronicle records themselves are typically not stored. However, if they are to be stored they are stored in a Slow Cheap Storage Device 806, which can be contained within workstation 800 (or be an external peripheral as shown in Fig. 3).

Queries or data processing commands are received by the CPU 801 via communication port 805 or prestored from storage 802. These queries are answered by the CPU after referring to the persistent views and other relations accessible from storage 802.

While the present invention has been described with respect to specific embodiments thereof, it will be understood by one skilled in the art that these are not exclusive embodiments. The present invention is applicable to numerous other application domains, including for example, credit cards, cellular telephone calls, stock trading, consumer banking, industrial control systems, retailing, frequent flier programs, etc., that do not depart from the spirit or principles of the present invention.

**Claims**

1. A method for using a computer system to process data of a transactional recording system database comprising the steps of:

    defining a chronide comprising a relation with a sequencing attribute, said relation comprising an unordered set of tuples;

    defining other relations to capture a state of said system; and

    generating a persistent view from said chronicle using a view definition language.

2. A method for using a computer system to process data of a transactional recording system database comprising the steps of:

    incrementally maintaining a persistent view in response to transactions processed in said database, said persistent view having been generated from a chronicle using a view definition language, said chronicle being defined to comprise a relation with a sequencing attribute, said relation comprising an unordered set of tuples; and

processing said data using said persistent view.

3. A method for using a computer system to answer queries of a transactional recording system database comprising the steps of:

defining a chronicle comprising a relation with a sequencing attribute, said relation comprising an unordered set of tuples; defining other relations to capture a state of said system; and generating a persistent view from said chronicle using a view definition language.

4. A method for using a computer system to answer queries of a transactional recording system database comprising the steps of:

incrementally maintaining a persistent view in response to transactions processed in said database, said persistent view having been generated from a chronicle using a view definition language, said chronicle being defined to comprise a relation with a sequencing attribute, said relation comprising an unordered set of tuples; and answering said queries using said persistent view.

5. The method of claim I or 3 wherein the step of defining a chronicle comprises: marking an existing attribute of said relation as said sequencing attribute; or marking an additional attribute of said relation as said sequencing attribute.

6. The method of claim 1 or 3 wherein the step of generating a persistent view has a specific complexity for incremental computation.

7. The method of claim 1 or 3 wherein said view definition language is a chronicle algebra.

8. The method of claim 7 wherein said chronicle algebra comprises the steps of:

generating said chronicle by an intermediate chronicle algebra;

summarizing said chronicle produced by said intermediate chronicle algebra; and

mapping said chronicle produced by said intermediate chronicle algebra into said persistent view.

9. The method of claim 2 or 4 wherein said incremental maintenance of said persistent view comprises the steps of:

proactively updating a relation not in said chronicle;

said relation having a plurality of temporal versions, each one of said plurality for every said update;

joining said tuples of said chronicle with one of said plurality of said temporal versions of said relation;

updating said chronicle;

updating said persistent view in response to an append into said chronicle on which said persistent view depends; and

storing said updated persistent view.

10. The method of claim 2 or 4 wherein said step of incrementally maintaining said persistent view is in response to a single append into said chronicle in constant time; or a single append into said chronicle in time logarithmic in size of said relations; or a single append into said chronicle in time polynomial in size of said relations; or a single append into said chronicle in time polynomial in size of said chronicle.

11. The method of claim 1 or 3 wherein said step of generating persistent views comprises: selecting tuples of said chronicle which satisfy a predicate; or projecting said chronicle on attributes that include a sequencing attribute; or forming a natural equijoin between two said chronicles on said sequencing attribute; or

forming a union of two said chronicles in a same chronicle group, and having a same type; or determining a difference between two said chronicles in said same chronicle group, and having a same type; or deriving a groupby with aggregation, having grouping attributes, with a sequence number as one of said grouping attributes; or determining a cartesian product between said chronicle and any said relation, wherein an implicit termoral join on said sequencing attribute exists between said chronicle and said relation.

**12.** The method of claim 1 or 3 wherein a plurality of said persistent views are generated for said chronicle.

**13.** The method of claim 2 or 4 wherein a plurality of persistent views are incrementally maintained.

**14.** The method of claim 2 or 4 wherein said persistent view is maintained for a specified period and said persistent view is overwritten at end of said period.

**15.** A method for using a computer system to process queries of a transactional recording system database comprising the steps of:

　　defining a chronicle comprising a relation with a sequencing attribute, said relation comprising an unordered set of tuples;

　　defining other relations to capture a state of said system;

　　generating a persistent view from said chronicle using a view definition language;

　　incrementally maintaining said persistent view in response to transactions processed in said database; and

　　answering said queries using said persistent view.

**16.** A method for using a computer system to process data of a transactional recording system database comprising the steps of:

　　defining a chronicle comprising a relation with a sequencing attribute, said relation comprising an unordered set of tuples;

　　defining other relations to capture a state of said system;

　　generating a persistent view from said chronicle using a view definition language;

　　incrementally maintaining said persistent view in response to transactions processed in said database; and

　　processing said data using said persistent view.

**17.** A database system for processing data, comprising:

　　means for defining a chronicle comprising a relation with a sequencing attribute, said relation comprising an unordered set of tuples;

　　means for generating a persistent view from said chronicle using a view definition language;

　　means for incrementally maintaining said persistent view in response to transactions processed in said database;

　　means for updating said persistent view in response to an append into said chronicle on which said persistent view depends;

　　means for storing said updated persistent view; and

　　means for processing said data using said persistent view.

**18.** A database system for answering queries, comprising:

　　means for defining a chronicle comprising a relation with a sequencing attribute, said relation comprising an unordered set of tuples;

　　means for generating a persistent view from said chronicle using a view definition language;

　　means for incrementally maintaining said persistent view in response to transactions processed in said database;

　　means for updating said persistent view in response to an append into said chronicle on which said persistent view depends;

　　means for storing said updated persistent view; and

　　means for answering said queries using said persistent view.

**19.** A database system for processing data, comprising:

　　means for defining a chronicle comprising a relation with a sequencing attribute, said relation comprising an unordered set of tuples; and

　　means for generating a persistent view from said chronicle using a view definition language;

**20.** A database system for processing data, comprising:

　　means for incrementally maintaining a persistent view in response to transactions processed in said database, said persistent view having been generated from a chronicle using a view definition language, said chronicle being defined to comprise a relation with a sequencing attribute, said relation comprising an unordered set of tuples;

means for updating said persistent view in response to an append into said chronicle on which said persistent view depends;

means for storing said updated persistent view; and

means for processing said data using said persistent view.

21. A database system for answering queries, comprising:

means for defining a chronicle comprising a relation with a sequencing attribute, said relation comprising an unordered set of tuples; and

means for generating a persistent view from said chronicle using a view definition language.

22. A database system for answering queries, comprising:

means for incrementally maintaining a persistent view in response to transactions processed in said database, said persistent view having been generated from a chronicle using a view definition language, said chronicle being defined to comprise a relation with a sequencing attribute, said relation comprising an unordered set of tuples;

means for updating said persistent view in response to an append into said chronicle on which said persistent view depends;

means for storing said updated persistent view; and

means for answering said queries using said persistent view.

EXISTING PERSISTENT VIEW — 100

NEW CHRONICLE RECORD — 101

MAINTAIN PERSISTENT VIEW INCREMENTALLY — 102

PERSISTENT VIEW — 104

**FIG. 1A**

QUERY POSED AGAINST CHRONICLE — 106

USE PERSISTENT VIEW TO ANSWER QUERY — 108

PERSISTENT VIEW — 104

**FIG. 1B**

*FIG. 2*

*FIG. 3*